# EUROPEAN PATENT SPECIFICATION

(11) **EP 1 352 166 B1**
(45) Date of publication and mention of the grant of the patent: **12.04.2006**
(21) Application number: 02729602.9
(22) Date of filing: 09.01.2002
(51) Int. Cl.: F02K 9/64, F02K 9/97

(54) **AN OUTLET NOZZLE AND A METHOD FOR MANUFACTURING AN OUTLET NOZZLE**
ABGABEDÜSE UND VERFAHREN ZUR HERSTELLUNG EINER ABGABEDÜSE
TUYERE DE SORTIE ET SON PROCEDE DE PRODUCTION

(30) Priority: 11.01.2001 SE 0100076; 11.01.2001 US 261045 P
(43) Date of publication of application: 15.10.2003
(73) Proprietor: Volvo Aero Corporation, 46181 Trollhättan (SE)
(72) Inventor: HÄGGANDER, Jan, S-461 32 Trollhättan (SE)
(74) Representative: Fröhling, Werner Otto
(86) International application number: PCT/SE2002/000020
(87) International publication number: WO 2002/055860

(56) References cited:
- US-A- 3 605 412
- US-A- 4 148 121
- US-A- 4 856 163
- US-A- 5 221 045

## Description

### TECHNICAL FIELD

The present invention relates to the field of outlet nozzles for use in liquid fuel rocket engines, according to the preamble of the subsequent claim 1, such a nozzle is disclosed in the document US-A.5 221 045. Also, the invention relates to a method for manufacturing these nozzles. The invention is especially intended for use in respect of cooled outlet nozzles for rocket motors driven by liquid fuel.

### BACKGROUND OF THE INVENTION

During operation, a rocket nozzle is subjected to very high stresses, for example in the form of a very high temperature on its inside (in the order of magnitude of 800 °K) and a very low temperature on its outside (in the order of magnitude of 50 °K). As a result of this high thermal load, stringent requirements are placed upon the choice of material, design and manufacture of the outlet nozzle. At least there is a need for effective cooling of the outlet nozzle.

Cooling is provided by attaching individual lengths of tubing on the inside surface of the nozzle. The geometry of each tube is such that it must conform to the conical or parabolic shape of the nozzle. Additionally, the entire inside surface of the nozzle must be covered to prevent "hot spots" which could result in premature failure of the nozzle. Each nozzle has a diameter ratio from the aft or large outlet end of the nozzle to the forward or small inlet end of the nozzle. Typical diameter ratios range from 2:1 to 3:1.

According to a previously known method of manufacturing a cooled outlet nozzle, rectangular tubes of constant cross section made from nickel-based steel or stainless steel are used, which tubes are arranged parallel with another and are welded together.

The tubes are helically wound such that they form an angle of helix in relation to the longitudinal axis of the nozzle, which angle increases progressively from the inlet end of the nozzle to its outlet end to form a bell shaped nozzle wall. The rocket engine exhausts flowing along the inside surface of such nozzle having helically arranged tubes result in an angled reaction force creating a roll momentum on the rocket that has to be compensated for by some additional means. These additional means often lead to increased weight and increased flow resistance. Having long channels without any increase in cross section will also affect the coolant flow resistance negatively.

### SUMMARY OF THE INVENTION

An object of the present invention is to provide a nozzle and a method for manufacturing it, which avoids the problems described above. This is achieved by means of the nozzle according to the invention, which is characterized in that it comprises at least two longitudinally arranged sections and that there is a shift between a positive and a negative channel angle in the transition from one section to an adjacent section. As a result of the invention, it is possible to reduce the roll momentum created by the helical tube channels.

According to an advantageous embodiment of the invention, the different angles of the cooling channels' in the nozzle sections are adapted to quench reaction forces originating from exhausts flowing past the channels. In this manner, it is possible to avoid the roll momentum completely.

According to another embodiment of the invention, each cooling channel extends helically with respect to the longitudinal axis of the nozzle.

According to one embodiment of the invention, the channels in each section have a constant cross section along their length.

Alternatively, the cross sectional area of the channels of two adjacent nozzle sections may be different. In this embodiment, the cross sectional area of the nozzle channels is preferably larger for a downstream nozzle section than for an upstream nozzle section.

A method according to the invention is characterized in the steps of joining a plurality of tubular channels to form a first section of the outlet nozzle in which the channels has an angle of helix in relation to the longitudinal axis of the nozzle, joining a plurality of tubular channels to form a second section of the outlet nozzle in which the channels have opposite angles of helix in relation to the longitudinal axis of the nozzle, and joining said sections to form a composite outlet nozzle having continuous cooling channels.

### BRIEF DESCRIPTION OF THE DRAWINGS

The invention will be further described in the following, in a non-limiting way with reference to the accompanying drawings in which:
- FIG 1: is a side view showing a nozzle according to the invention,
- FIG 2: is a longitudinal section through a joint between two sections, shown in larger scale and before welding, and
- FIG 3: shows the joint according to FIG 2, after welding.

### DETAILED DESCRIPTION OF THE INVENTION

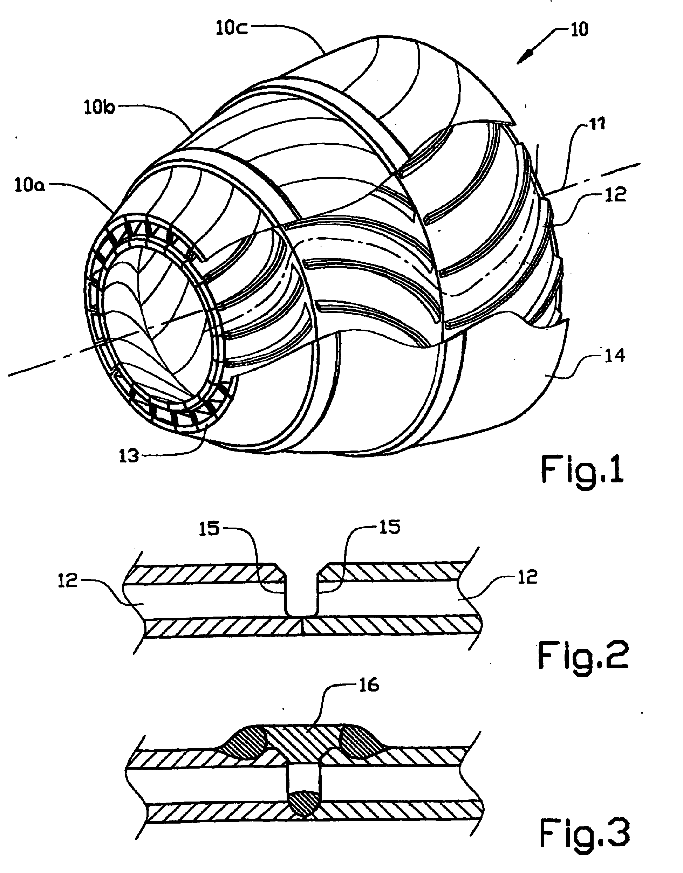

Figure 1 shows a diagrammatic and somewhat simplified side view of an outlet nozzle 10 which is produced according to the present invention. The nozzle is intended for use in rocket engines of the type which uses a liquid fuel, for example liquid hydrogen. The working of such a rocket engine is previously known per se and is therefore not described in detail here. The nozzle 10 is cooled with the aid of a cooling medium which is preferably also used as fuel in the particular rocket engine. The invention is however not limited to outlet nozzles of this type but can also be used in those cases in which the cooling medium is dumped after it has been used for cooling.

The outlet nozzle is manufactured with an outer shape that is substantially bell-shaped. Thus, the nozzle 10 forms a body of revolution having an axis of revolution 11 and a cross section which varies in diameter along said axis.

The nozzle in figure 1 comprises three longitudinally arranged sections 10a, 10b, 10c. It is possible to have a smaller or a larger number of these sections.

The nozzle wall of each section is a structure comprising a plurality of mutually adjacent, tubular cooling channels 12 helically extending substantially in parallel to each other from the inlet end of the section to its outlet end.

Rectangular tubes of constant cross section made from nickel-based steel, stainless steel or other heat resistant materials may be used for manufacturing the sections. In this process, the tubes are arranged helically, in parallel with one another and are welded together. The angle of helix may increase progressively from the inlet end 13 of the nozzle section to its outlet end 14 to form a bell-shaped nozzle wall. The tubes are welded to each other, preferably at the outside by laser welding. The inside of the nozzle is not welded, which means that the gaps may open up when the nozzle is operating, as the thermal cycle is reversed. The maximum thermal stress cycle is therefore limited.

The tubes 12 in adjacent sections are oriented so that there is a shift between a positive and a negative channel angle in the transition from one section to an adjacent section. Thus, the tube channels in two adjacent sections have opposite angles of helix in relation to the longitudinal axis 11 of the nozzle.

Figure 2 shows an axial joint of two sections before welding that allows for welding from the outside. For this purpose, a notch 15 has been made at the radial outside of the tube ends of each section. The notches 15 make it possible for the laser beam to reach the inner remote parts of the tubes for fusing them together. Then it is possible to join the sides of the rectangular tubes. Finally, as shown in figure 3, a ring 16 is applied over the joint and welded to bridge the gap between the two adjoining nozzle sections.

The use of two or more sections in the outlet nozzle makes it possible to change the cross sectional area of the tubes at each axial joint. For example, the radial height of the cross section could be increased to provide more flow area and to reduce the pressure drop in the cooling channels. The restart of the tubes in the transition from one section to the next following section increases the flow area for the constant tube cross section. Only a small number of restarts are needed to reduce the pressure drop to be acceptable for closed engine cycles. Distribution manifolds are needed at the joints to insure pressure and flow distribution.

In the upstream end of the nozzle, it is desirable to keep the cross section small to provide the needed heat flux to reduce the material temperature. Here, the tube thickness could be thinned down still providing the pressure capacity. Thinner walls lead to lower material temperature that increases the cyclic life of the nozzle. In the downstream end of the nozzle, it is desirable to have a large flow area to minimize the pressure drop. The wider tubes needs thicker material to maintain the pressure capacity. This goes hand in hand with needs for a stiff nozzle structure for withstanding the side load, external pressure and vibration.

The inside of a finished nozzle is provided with small helical grooves. In the case of unidirectional winding, the friction of the flame creates a reaction momentum that normally would have to be counteracted with some additional means. By shifting the angle of helix in accordance with the invention, the roll momentum can be counteracted without resorting to additional means. In the case of expander cycle rocket engines, the increased friction leads to more heat being transferred to the coolant and that the turbo-machinery is supplied with more power.

Before welding the tubes to each other, all the sides of the tube are accessible. The side facing the flame and part of the tube sides facing adjacent tubes may be coated with copper. This will enhance heat transfer from the parts of the tube not directly exposed to the rocket flame. This leads to a reduced material temperature in the load carrying structure.

The invention is not limited to the above-described embodiments, but several modifications are possible within the scope of the following claims. For example, the joining of two sections may be performed differently than described.

## Claims

1. An outlet nozzle (10) for use in a liquid fuel rocket engine, said nozzle forming a body of revolution having an axis (11) of revolution and a cross section which varies in diameter along said axis, and having a wall structure comprising a plurality of mutually adjacent cooling channels (12), helically extending substantially in parallel from the inlet end (13) of the nozzle to its outlet end (14),
**characterized in**
**that** the nozzle (10) comprises at least two longitudinally arranged sections (10a, 10b) and that there is a shift between a positive and a negative channel angle in the transition from one section to an adjacent section.

2. A nozzle according to claim 1,
**characterized in**
**that** the different angles of the cooling channels (12) in the nozzle sections (10a, 10b) are adapted to quench reaction forces originating from exhausts flowing past said channels.

3. A nozzle according to claim 1 or 2,
**characterized in**
**that** each cooling channel (12) extends helically with respect to the longitudinal axis (11) of the nozzle (10).

4. A nozzle according to anyone of claims 1-3,
**characterized in**
**that** the channels in each section (10a, 10b) have a constant cross section along their length.

5. A nozzle according to any one of claims 1-4,
**characterized in**
**that** the cross sectional area of the channels (12) of two adjacent nozzle sections (10a, 10b) is different.

6. A nozzle according to claim 5,
**characterized in**
**that** the channel cross sectional area is larger for a downstream nozzle section than for an upstream nozzle section.

7. A nozzle according to any one of claims 1-6,
**characterized in**
**that** the channels (12) have a rectangular cross section.

8. A method for manufacturing an outlet nozzle (10) for use in a liquid fuel rocket engine, said nozzle forming a body of revolution having an axis (11) of revolution and a cross section which varies in diameter along said axis, and having a wall structure comprising a plurality of mutually adjacent cooling channels (12), helically extending substantially in parallel from the inlet end (13) of the nozzle to its outlet end (14),
**characterized in** the steps of
joining a plurality of the tubular channels (12) to form a first section (10a) of the outlet nozzle (10) in which the channels has an angle of helix in relation to the longitudinal axis (11) of the nozzle,
joining a plurality of tubular channels (12) to form a second section (10b) of the outlet nozzle (10) in which the channels have opposite angles of helix in relation to the longitudinal axis of the nozzle, and
joining said sections (10a, 10b) to form a composite outlet nozzle (10) having continuous cooling channels (12).

9. A method according to claim 8,
**characterized in that** the said joining is realised by means of laser welding and that the tubular channels (12) are joined by welding at the outside of the nozzle.

10. A method according to claim 8 or 9,
**characterized in** forming the tubular channels (12) by means of tubes having a rectangular cross section.

11. A method according to claim 10,
**characterized in** the step of providing the meeting edges of sections to be joined with notches (15) at the outside, to enable welding the remote part of the tubular channels from the outside of the nozzle (10).

12. A method according to claim 11,
**characterized in** the steps of applying a ring shaped element (16) to bridge the notch area, and welding said element to the meeting channel ends.

## Patentansprüche

1. Ausströmdüse (10) zum Einsatz in einem Flüssigtreibstoff-Raketentriebwerk, wobei die Düse
- einen Drehkörper mit einer Drehachse (11) und einem Querschnitt bildet, der sich im Durchmesser längs der Achse ändert, und
- einen Wandaufbau mit einer Vielzahl von zueinander benachbarten Kühlkanälen (12) hat, die sich wendelförmig im Wesentlichen parallel von dem Einströmende (13) der Düse zu ihrem Ausströmende (14) erstrecken,
**dadurch gekennzeichnet,**
- **dass** die Düse (10) wenigstens zwei in Längsrichtung angeordnete Abschnitte (10a, 10b) hat und
- **dass** am Übergang von einem Abschnitt zu einem benachbarten Abschnitt ein Versatz zwischen einem positiven und einem negativen Kanalwinkel vorhanden ist.

2. Düse nach Anspruch 1, **dadurch gekennzeichnet, dass** die unterschiedlichen Winkel der Kühlkanäle (12) in den Düsenabschnitten (10a, 10b) so angepasst sind, dass Reaktionskräfte, die aus den an den Kanälen vorbeiströmenden Abgasen entstehen, unterdrückt werden .

3. Düse nach Anspruch 1 oder 2, **dadurch gekennzeichnet, dass** sich jeder Kühlkanal (12) wendelförmig bezüglich der Längsachse (11) der Düse (10) erstreckt.

4. Düse nach einem der Ansprüche 1 bis 3, **dadurch gekennzeichnet, dass** die Kanäle in jedem Abschnitt (10a, 10b) über ihrer Länge einen konstanten Querschnitt haben.

5. Düse nach einem der Ansprüche 1 bis 4, **dadurch gekennzeichnet, dass** die Querschnittsfläche der Kanäle (12) von zwei benachbarten Düsenabschnitten (10a, 10b) unterschiedlich ist.

6. Düse nach Anspruch 5, **dadurch gekennzeichnet, dass** die Kanalquerschnittsfläche für einen stromab befindlichen Düsenabschnitt größer ist als für einen stromauf befindlichen Düsenabschnitt.

7. Düse nach einem der Ansprüche 1 bis 6, **dadurch gekennzeichnet, dass** die Kanäle (12) einen rechteckigen Querschnitt haben.

8. Verfahren zur Herstellung einer Ausströmdüse (10) für den Einsatz in einem Flüssigtreibstoff-Raketentriebwerk, wobei die Düse
- einen Drehkörper mit einer Drehachse (11) bildet und einen Querschnitt hat, der sich im Durchmesser längs der Achse ändert, und
- einen Wandaufbau mit einer Vielzahl von zueinander benachbarten Kühlkanälen (12) hat, die sich wendelförmig im Wesentlichen parallel von dem Einströmende (13) der Düse zu ihrem Ausströmende (14) erstrecken,
**gekennzeichnet durch** die Schritte
- Verbinden einer Vielzahl von rohrförmigen Kanälen (12) zur Bildung eines ersten Abschnitts (10a) der Ausströmdüse (10), in welchem die Kanäle bezogen auf die Längsachse (11) der Düse einen Steigungswinkel haben,
- Verbinden einer Vielzahl von rohrförmigen Kanälen (12) zur Bildung eines zweiten Abschnitts (10b) der Ausströmdüse (10), in welchem die Kanäle bezogen auf die Längsachse der Düse entgegengesetzte Neigungswinkel haben, und
- Verbinden der Abschnitte (10a, 10b) zur Bildung einer zusammengesetzten Ausströmdüse (10), die fortlaufende Kühlkanäle (12) hat.

9. Verfahren nach Anspruch 8, **dadurch gekennzeichnet, dass** das Verbinden mit Hilfe einer Laserschweißung ausgeführt wird und dass die rohrförmigen Kanäle (12) durch Verschweißen an der Außenseite der Düse verbunden werden.

10. Verfahren nach Anspruch 8 oder 9, **dadurch gekennzeichnet, dass** die rohrförmigen Kanäle (12) mit Hilfe von Rohren gebildet werden, die einen rechteckigen Querschnitt haben.

11. Verfahren nach Anspruch 10, **gekennzeichnet durch** den Schritt, die aufeinandertreffenden Ränder der zu verbindenden Abschnitte an der Außenseite mit Nuten (15) zu versehen, um das Verschweißen des entfernt liegenden Teils der rohrförmigen Kanäle von der Außenseite der Düse (10) aus zu ermöglichen.

12. Verfahren nach Anspruch 11, **gekennzeichnet durch** die Schritte, ein ringförmiges Element (16) zur Überbrückung des Nutbereichs aufzubringen und das Element mit den aufeinandertreffenden Kanalenden zu verschweißen.

## Revendications

1. Tuyère de sortie (10) pour une utilisation dans un moteur de fusée à combustible liquide, ladite tuyère formant un corps de révolution ayant un axe (11) de révolution et une section transversale qui varie en diamètre le long dudit axe, et ayant une structure de paroi comportant une pluralité de canaux de refroidissement mutuellement adjacents (12), s'étendant en hélice de manière sensiblement parallèle à partir de l'extrémité d'entrée (13) de la tuyère jusqu'à son extrémité de sortie (14),
**caractérisée en ce que** la tuyère (10) comporte au moins deux tronçons agencés longitudinalement (10a, 10b) et **en ce qu'**il existe un changement entre un angle de canal positif et un angle de canal négatif dans la transition d'un tronçon à un tronçon adjacent.

2. Tuyère selon la revendication 1, **caractérisée en ce que** les différents angles des canaux de refroidissement (12) dans les tronçons de tuyère (10a, 10b) sont adaptés pour étouffer des forces de réaction ayant pour origine des gaz d'échappement circulant devant lesdits canaux.

3. Tuyère selon la revendication 1 ou 2, **caractérisée en ce que** chaque canal de refroidissement (12) s'étend en hélice par rapport à l'axe longitudinal (11) de la tuyère (10).

4. Tuyère selon l'une quelconque des revendications 1 à 3, **caractérisée en ce que** les canaux dans chaque tronçon (10a, 10b) ont une section transversale constante le long de leur longueur.

5. Tuyère selon l'une quelconque des revendications 1 à 4, **caractérisée en ce que** l'aire de section transversale des canaux (12) de deux tronçons de tuyère adjacents (10a, 10b) est différente.

6. Tuyère selon la revendication 5, **caractérisée en ce que** l'aire de section transversale de canal est plus grande pour un tronçon de tuyère aval que pour un tronçon de tuyère amont.

7. Tuyère selon l'une quelconque des revendications 1 à 6, **caractérisée en ce que** les canaux (12) ont une section transversale rectangulaire.

8. Procédé pour fabriquer une tuyère de sortie (10) pour une utilisation dans un moteur de fusée à combustible liquide, ladite tuyère formant un corps de révolution ayant un axe (11) de révolution et une section transversale qui varie en diamètre le long dudit axe, et ayant une structure de paroi comportant une pluralité de canaux de refroidissement mutuellement adjacents (12), s'étendant en hélice de manière sensiblement parallèle à partir de l'extrémité d'entrée (13) de la tuyère jusqu'à son extrémité de sortie (14),
**caractérisé en ce qu'**il comporte les étapes consistant à
réunir une pluralité de canaux tubulaires (12) pour former un premier tronçon (10a) de la tuyère de sortie (10) dans lequel les canaux ont un angle d'hélice par rapport à l'axe longitudinal (11) de la tuyère,
réunir une pluralité de canaux tubulaires (12) pour former un second tronçon (10b) de la tuyère de sortie (10) dans lequel les canaux ont des angles d'hélice opposés par rapport à l'axe longitudinal de la tuyère, et
réunir lesdits tronçons (10a, 10b) pour former une tuyère de sortie composite (10) ayant des canaux de refroidissement continus (12).

9. Procédé selon la revendication 8, **caractérisé en ce que** ladite réunion est réalisée par l'intermédiaire d'un soudage au laser et **en ce que** les canaux tubulaires (12) sont réunis par un soudage à l'extérieur de la tuyère.

10. Procédé selon la revendication 8 ou 9, **caractérisé par** la formation des canaux tubulaires (12) par l'intermédiaire de tubes ayant une section transversale rectangulaire.

11. Procédé selon la revendication 10, **caractérisé par** l'étape consistant à agencer les bords jointifs de tronçons à réunir avec des rainures (15) à l'extérieur, pour permettre un soudage de la partie distante des canaux tubulaires à partir de l'extérieur de la tuyère (10).

12. Procédé selon la revendication 11, **caractérisé par** les étapes consistant à appliquer un élément en forme d'anneau (16) pour combler la zone de rainure, et à souder ledit élément sur les extrémités de canaux jointives.
